# EUROPÄISCHE PATENTSCHRIFT

(11) **EP 1 319 866 B1**
(45) Veröffentlichungstag und Bekanntmachung des Hinweises auf die Patenterteilung: **30.03.2005**
(21) Anmeldenummer: 02027677.0
(22) Anmeldetag: 12.12.2002
(51) Int. Cl.: F16H 1/22, F16H 37/06

(54) **Getriebemotor**
Gear motor
Motor réducteur

(30) Priorität: 13.12.2001 DE 20120218 U; 02.05.2002 DE 20206979 U
(43) Veröffentlichungstag der Anmeldung: 18.06.2003
(73) Patentinhaber: K & A Knödler GmbH, 73760 Ostfildern (DE)
(72) Erfinder: Knödler, Werner, 73760 Ostfildern (DE); Wortberg, Johannes, Prof. Dr. Ing., Lotharstrasse 1, 47057 Duisburg (DE)
(74) Vertreter: Sties, Jochen, Dipl.-Ing.

(56) Entgegenhaltungen:
- FR-A- 1 254 056
- US-A- 2 076 015
- US-A- 2 173 339
- US-A- 2 436 930
- US-A- 5 463 914
- PATENT ABSTRACTS OF JAPAN vol. 009, no. 027 (E-294), 6. Februar 1985 (1985-02-06) & JP 59 172948 A (SHIBAURA SEISAKUSHO:KK), 29. September 1984 (1984-09-29)

## Beschreibung

Die Erfindung betrifft einen Getriebemotor, der als kompakter Antrieb insbesondere für Spritzgießmaschinen und Extruder verwendbar ist, entsprechend dem Oberbegriff des Anspruchs 1.

Es sind die verschiedensten Getriebemotoren bekannt, die ein Getriebe verwenden, um das Antriebsdrehmoment und die Antriebsdrehzahl eines Antriebsmotors geeignet zu untersetzen bzw. zu übersetzen. Allgemein wird dabei ein hohes Untersetzungsverhältnis bei hoher übertragbarer Leistung, gutem Wirkungsgrad und kompakten Abmessungen gefordert.

Für Anwendungen mit kleineren Leistungsanforderungen, beispielsweise zum Antrieb eines Kompressors eines Kühlschranks, ist es aus der gattungsgemäßen US-A-5,463,914 bekannt, vier Miniaturmotoren zu verwenden, die jeweils ein Ritzel aufweisen, das in ein zentrales Zahnrad eingreift. Die Motoren sind in einen gemeinsamen Halteblock eingesetzt, werden mit einer Spannung von 12V versorgt und haben eine Maximaldrehzahl von über 13.000 U/min.

Aus der JP-A-59172948 ist eine Servoeinheit bekannt, die vier kleine Elektromotoren verwendet. Diese sind symmetrisch um ein zentrales Zahnrad herum angeordnet.

Die Aufgabe der Erfindung besteht darin, einen Getriebemotor zu schaffen, der bei geringen Abmessungen eine hohe Leistung liefern kann, wie sie zum Antrieb von z.B. Spritzgießmaschinen und Extrudern notwendig ist.

Zu diesem Zweck schafft die Erfindung einen Getriebemotor, insbesondere für Spritzgießmaschinen und Extruder, mit einem Motorgehäuse, mehreren Elektromotoren, die in dem Motorgehäuse angeordnet sind und jeweils ein Antriebsritzel aufweisen, die zusammen symmetrisch zu einem zentralen Abtriebszahnrad angeordnet sind, das auf einer Getriebewelle angebracht ist, wobei das Motorgehäuse für jeden Elektromotor einen Motoraufnahmeraum aufweist, in welchem der Stator des entsprechenden Elektromotors fest angebracht ist, und wobei zwischen den Motoraufnahmeräumen Kühlkanäle angeordnet sind. Dieser Getriebemotor kombiniert die Antriebsleistung von mehreren vergleichsweise kompakten Elektromotoren, die platzsparend um das gemeinsame Abtriebszahnrad herum angeordnet sind. Somit läßt sich bei einem kompakten Aufbau ein hohes Antriebsdrehmoment erhalten Mit dem aus den Antriebsritzeln und dem Abtriebszahnrad bestehenden Getriebe ist eine Untersetzung bis i=12 in einer einzigen Stufe erzielbar. Dies gewährleistet zum einen einen hohen Wirkungsgrad und zum anderen einen geräuscharmen Betrieb aufgrund der geringen Umfangsgeschwindigkeiten. Die Kühlkanäle sind vorzugsweise in den Bereichen angeordnet, die oberhalb und unterhalb einer Ebene liegen, die durch die beiden Längsachsen zweier benachbarter Elektromotoren verläuft, da in diesen Bereichen genügend Platz für die Kühlkanäle ist, ohne das der kompakte Aufbau gestört wird.

Vorzugsweise sind vier Elektromotoren vorgesehen, die im Winkel von jeweils 90° um das Abtriebszahnrad herum angeordnet sind. Auf diese Weise läßt sich ein Gehäuse mit quadratischem Querschnitt verwenden, in dessen "Ecken" jeweils ein Elektromotor angeordnet ist. Dies ergibt eine maximale Ausnutzung des Gehäusevolumens.

Gemäß einer bevorzugten Ausführungsform der Erfindung ist vorgesehen, daß die Getriebewelle als Hohlwelle ausgeführt ist. Dies ist sinnvoll, da das innenliegende Ende der Getriebewelle zwischen den vier außenliegenden Elektromotoren grundsätzlich zugänglich ist. Somit kann, wenn der Getriebemotor für einen Extruder verwendet wird, die Extruderschnecke durch die Getriebewelle hindurch nach hinten ausgestoßen oder ausgezogen werden. Dies erleichtert verschiedene Wartungsarbeiten, die nun einfach durchgeführt werden können, ohne daß der Getriebemotor demontiert werden muß. Es ist auch möglich, wenn der Getriebemotor zum Antrieb einer Spritzgießmaschine dient, mittels der Hohlwelle die Plastifizierschnecke in Drehung zu versetzen und in der Hohlwelle eine Spindel zu führen, welche die Einspritzbewegung bei der Spritzgießmaschine bewirkt. Auf diese Weise ergibt sich ein besonders kompakter Antrieb.

Vorzugsweise ist vorgesehen, daß das Antriebsritzel eine Ritzelwelle aufweist, die durch eine Konusverbindung kraftschlüssig mit der Motorwelle des entsprechenden Elektromotors verbunden ist. Auf diese Weise ergibt sich eine in axialer Richtung kurz bauende Verbindung zwischen der Ritzelwelle und der Motorwelle, insbesondere wenn die Motorwelle hohl ist und sich durch sie hindurch eine Spannschraube erstreckt, mittels der die Ritzelwelle mit der Motorwelle verspannt ist.

Durch die Kühlkanäle kann entweder Luft geleitet werden. In diesem Fall sind die Kühlkanäle an ihrem dem Abtriebszahnrad zugewandten Ende vorzugsweise geöffnet, so daß die Luft dort austreten kann.

Durch die Kühlkanäle kann auch eine Kühlflüssigkeit geleitet werden, wobei dann die Kühlkanäle an ihrem dem Abtriebszahnrad zugewandten Ende verschlossen sind und wobei an diesem Ende ein Überströmkanal zwischen benachbarten Kühlkanälen gebildet ist, so daß die benachbarten Kühlkanäle in entgegengesetzten Richtungen durchströmt werden. Wenn gleichzeitig noch an dem vom Abtriebszahnrad abgewandten Ende des Motorgehäuses Querkanäle vorgesehen sind, die sich jeweils durch einen Aufnahmeraum für einen Elektromotor hindurcherstrecken und einen der Kühlkanäle zwischen zwei der Elektromotoren mit einem der Kühlkanäle zwischen zwei anderen der Elektromotoren miteinander verbinden, können der Zufluß und der Abfluß für die Kühlflüssigkeit auf derselben Seite des Gehäuses angeordnet werden. Gleichzeitig kann das gesamte Motorgehäuse mäanderförmig von der Kühlflüssigkeit durchströmt werden.

Für das Antriebsritzel und das Abtriebszahnrad ist vorzugsweise ein separates Getriebegehäuse vorgesehen, das mit dem Motorgehäuse verschraubt ist. Das separate Getriebegehäuse ist vorzugsweise als Blockgehäuse ausgeführt, so daß sämtliche Lagersitze in einer Aufspannung bearbeitet werden können. Es ist lediglich eine seitliche Öffnung vorgesehen, durch die das Abtriebszahnrad in das Getriebegehäuse eingebracht werden kann.

Vorzugsweise ist vorgesehen, daß das Getriebegehäuse die Kühlkanäle des Motorgehäuses verschließt. Dies ermöglicht es, die Überströmkanäle mit geringem Aufwand an einer Seitenfläche des Motorgehäuses gut zugänglich auszuführen und sie mit geringem Aufwand zu verschließen.

Gemäß einer Ausführungsform der Erfindung ist ein zweiter Getriebemotor vorgesehen, dessen Abtriebszahnrad konzentrisch mit der Getriebewelle des ersten Getriebemotors angeordnet ist, wobei das Abtriebszahnrad des zweiten Getriebemotors mittels einer Keilwellenverbindung mit einer Spindel verbunden ist, auf der die Getriebewelle des ersten Getriebemotors angeordnet ist, wobei zwischen dieser Getriebewelle und der Spindel ein Bewegungsgewinde vorgesehen ist. Auf diese Weise ergibt sich ein besonders kompakter Antrieb, der die Spindel sowohl in Drehung versetzen als auch in axialer Richtung verstellen kann

Um die in Axialrichtung wirkenden Lasten aufzunehmen, ist die Bewegungsmutter vorzugsweise mittels Axiatlagern im Getriebegehäuse gelagert.

Die Antriebsritzel und das Abtriebszahnrad sind vorzugsweise schrägverzahnt. Dies ermöglicht einen geräuscharmen, stoßfreien Lauf Zur Aufnahme der von der Verzahnung herrührenden Axiallasten werden Kegelrollenlager oder Schrägkugellager in X-Anordnung verwendet.

Die Erfindung wird nachfolgend anhand verschiedener Ausführungsformen beschrieben, die in den beigefügten Zeichnungen dargestellt sind. In diesen zeigen:
- Figur 1 in einem schematischen Längsschnitt entlang der Linie I-I von Figur 2 einen Getriebemotor mit Motorgehäuse und Getriebegehäuse gemäß einer ersten Ausführungsform der Erfindung;
- Figur 2 den Getriebemotor von Figur 1 in einer Draufsicht;
- Figur 3 in einem Querschnitt entlang der Ebene III-III von Figur 1 das Getriebegehäuse, wobei die Antriebsritzel und das Abtriebszahnrad weggelassen wurden;
- Figur 4 das Getriebegehäuse von Figur 3 in einer Seitenansicht;
- Figur 5 in einer schematischen Draufsicht auf die Ebene V-V von Figur 1 das Motorgehäuse;
- Figur 6 in einer teilgeschnittenen Seitenansicht eine Baugruppe bestehend aus einem ersten Getriebemotor und einen zweiten Getriebemotor;
- Figur 7 die Baugruppe von Figur 6 in einer Vorderansicht;
- Figur 8 in einem schematischen Längsschnitt einen Getriebemotor gemäß einer zweiten Ausführungsform der Erfindung;
- Figur 9 in einer schematischen Draufsicht einen Getriebemotor gemäß einer dritten Ausführungsform der Erfindung;
- Figur 10 einen Schnitt entlang der Ebene X-X von Figur 9;
- Figur 11 einen Schnitt entlang der EbeneXI-XI von Figur 9;
- Figur 12 eine schematische Draufsicht auf einen Getriebemotor gemäß einer vierten Ausführungsform der Erfindung;
- Figur 13 einen Schnitt entlang der Ebene XIII-XIII von Figur 12.

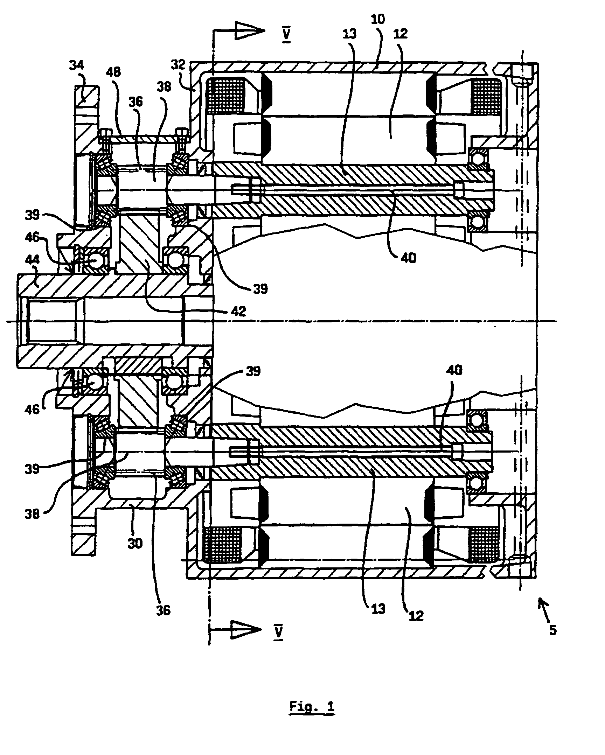

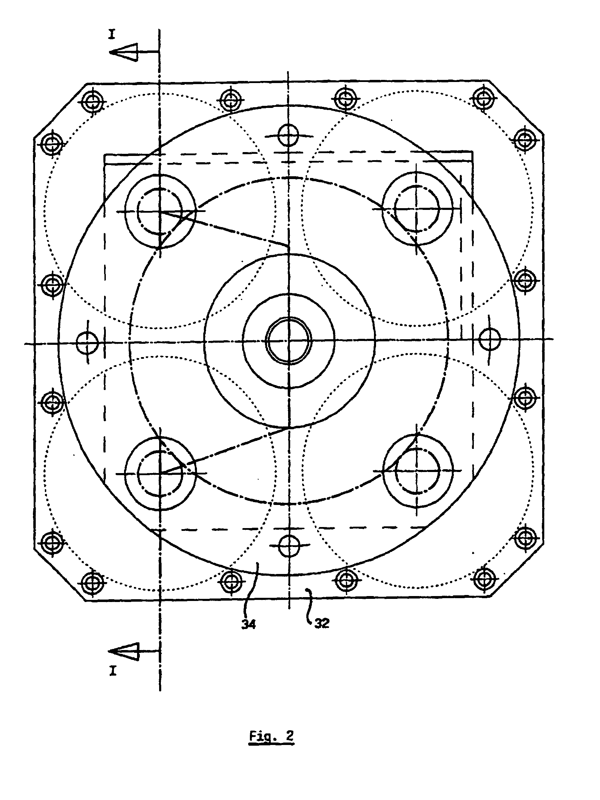

In den Figuren 1 und 2 ist ein Getriebemotor 5 gemäß einer ersten Ausführungsform der Erfindung gezeigt. Zur Vereinfachung der Beschreibung bezieht sich der Begriff "vorne" auf den in Figur 1 linken Teil des Getriebemotors 5 und "hinten" auf den in Figur 1 rechten Teil des Getriebemotors.

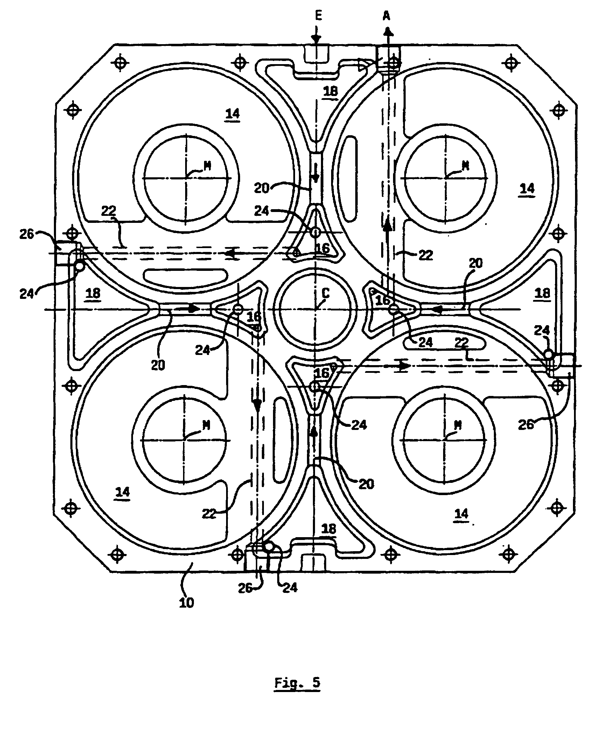

Der Getriebemotor weist ein Motorgehäuse 10 auf, das mit einem Getriebegehäuse 30 verschraubt ist. Das Motorgehäuse 10 (siehe auch Figur 5) hat einen quadratischen Querschnitt mit abgerundeten Ecken und nimmt vier Elektromotoren 12 auf Für jeden Elektromotor 12 ist ein Motoraufnahmeraum 14 vorgesehen. Der Rotor jedes Elektromotors 12 ist in herkömmlicher Weise auf einer wälzgelagerten Motorwelle 13 im Motorgehäuse 10 gelagert, und der entsprechende Stator ist fest im Motorgehäuse angebracht. Die Mittelachse jedes Elektromotors ist mit M bezeichnet. Die Elektromotoren sind symmetrisch im Winkel von 90° um eine Längsachse C des Getriebemotors angeordnet. Zwischen den Motoraufnahmeräumen 14 ist eine Getriebewellenöffnung 15 vorgesehen, die sich konzentrisch zur Längsachse C von der vorderen zur hinteren Seite des Motorgehäuses erstreckt.

Im Motorgehäuse 10 sind zwischen den einzelnen Motoraufnahmeräumen 14 jeweils zwei Kühlkanäle vorgesehen, nämlich ein radial innenliegender Kühlkanal 16 und ein radial außenliegender Kühlkanal 18. Jeweils ein Kühlkanal 16 und ein Kühlkanal 18 liegen paarweise beiderseits einer Ebene, die durch die Mittelachsen M zweier benachbarter Elektromotoren verläuft. Jeder Kühlkanal hat einen etwa dreieckigen Querschnitt, so daß der im Gehäuse zur Verfügung stehende Bauraum optimal ausgenutzt wird.

Zwischen jedem radial außenliegenden Kühlkanal 18 und dem benachbarten innenliegenden Kühlkanal 16 ist an der vorderen Stirnfläche des Motorgehäuses 10 ein in radialer Richtung verlaufender Überströmkanal 20 vorgesehen. Die Überströmkanäle 20 werden durch das Getriebegehäuse 30 verschlossen, das auf die in Figur 5 sichtbare, vordere Stirnfläche des Motorgehäuses 10 aufgeschraubt wird.

Auf der hinteren Seite des Motorgehäuses ist jeweils ein Querkanal 22 vorgesehen, der sich von einem radial innenliegenden Kühlkanal 16 zwischen einem Paar von Elektromotoren 12 zu einen radial außenliegenden Kühlkanal 18 zwischen einem benachbarten Paar von Elektromotoren 12 erstreckt. Die Querkanäle 18 verlaufen etwa tangential zur Getriebewellenöffnung 15. Da die Querkanäle 22 in axialer Richtung hinter den Kühlkanälen liegen, sind kleine Bohrungen 24 vorgesehen, mittels denen die Querkanäle mit den Kühlkanälen 16, 18 verbunden. Die außenliegenden Enden der Querkanäle sind durch Schraubstopfen 26 verschlossen bis auf eine Ausnahme; dieses Ende dient als Ausgang A für die Kühlflüssigkeit, die durch die Kühlkanäle geleitet werden soll. Neben dem Ausgang A ist ein Eingang E vorgesehen, der als Bohrung zur einem der radial außenliegenden Kühlkanäle 18 ausgeführt ist. Der Eingang E und der Ausgang A liegen beide am hinteren Ende des Motorgehäuses.

Vom Eingang E wird das Kühlmittel durch den Kühlkanal 18 nach vorne, dann durch den Überströmkanal 20 radial nach innen zum innenliegenden Kühlkanal 16 geführt und durch diesen in Gegenrichtung wieder zum hinteren Ende des Motorgehäuses. Vor dort wird die Kühlflüssigkeit durch die Bohrung 24 und den Querkanal 22 zum nächsten außenliegenden Kühlkanal 18 geführt, in dem die Kühlflüssigkeit wieder zur vorderen Seite des Gehäuses geführt wird, etc. Durch diese Anordnung von Kühlkanälen 16, 18, Querkanälen 22 und Überströmkanälen 20 wird die Kühlflüssigkeit mäanderförmig durch das gesamte Gehäuse geleitet, so daß die Motoraufnahmeräume 14 wirkungsvoll und gleichmäßig gekühlt werden.

Das Getriebegehäuse 30 ist ein Blockgehäuse mit einem Motorflansch 32, der in der Ebene V-V von Figur 1 mit dem Motorgehäuse 10 verschraubt wird, und einem Befestigungsflansch 34, mittels dem später der Getriebemotor an beispielsweise eine von ihm angetriebene Maschine angeschraubt werden kann. Zwischen dem Motorflansch 32 und dem Befestigungsflansch 34 hat das Getriebegehäuse einen quadratischen Querschnitt, wobei eine Seite als Montageöffnung 35 offen ausgeführt ist.

Das Getriebegehäuse 30 nimmt vier schrägverzahnte Antriebsritzel 36 auf, die einstückig mit einer Ritzelwelle 38 ausgebildet sind, die durch Kegelrollenlager 39 im Getriebegehäuse 30 gelagert ist. Jede Ritzelwelle ist einer Motorwelle 13 zugeordnet, mit der sie durch eine Konusverbindung verbunden ist Wie in Figur 1 zu sehen ist, sind die Motorwellen 13 hohl ausgeführt und weisen an ihrem vorderen Ende eine konische Aussparung auf, während sich die Ritzelwellen an ihrem hinteren Ende konisch verjüngen. Durch jede Motorwelle 13 erstreckt sich eine Spannschraube 40, die in ein Gewinde im hinteren Ende der entsprechenden Ritzelwelle 38 eingreift und diese in die konische Aussparung zieht. Auf diese Weise ist jede Ritzelwelle 38 kraftschlüssig mit der zugehörigen Motorwelle 13 verbunden.

Falls gewünscht, kann am hinteren Ende der Motorwelle auch ein Sicherungsring angebracht werden, an dem sich die Spannschraube 40 abstützen kann, wenn sie gelöst wird. Dies ermöglicht, die Ritzelwelle 38 aus der Motorwelle 13 herauszudrücken.

Mittig zwischen den Antriebsritzeln 36 ist ein schrägverzahntes, zur Längsachse C konzentrisches Abtriebszahnrad 42 angeordnet. Es ist auf einer Getriebewelle 44 drehfest angebracht, beispielsweise durch eine Keilverbindung. Die Getriebewelle 44 ist als Hohlwelle ausgeführt und auf Schrägkugellagern 46 im Getriebegehäuse 30 gelagert.

Die Montageöffnung des Getriebegehäuses 30 wird durch eine Platte 48 verschlossen, wenn das Abtriebszahnrad 42 im Getriebegehäuse 30 montiert ist; die Antriebsritzel 36 werden durch die Lageröffnungen montiert.

Der beschriebene Getriebemotor bietet ein hohes Antriebsdrehmoment, da das Antriebsdrehmoment der vier einzelnen Elektromotoren vereinigt wird. Gleichzeitig ergibt sich eine sehr hohe Leistungsdichte, da das Gesamtdrehmoment der vier kleineren Elektromotoren sehr viel größer ist als das Drehmoment, das ein einziger Elektromotor bereitstellen könnte, der in einem Gehäuse mit denselben Abmessungen untergebracht werden kann. Schließlich eröffnet die Tatsache, daß der Raum entlang der Mittelachse des Gehäuses nicht verbaut werden muß, die Möglichkeit, ein von der Getriebewelle angetriebenes Bauteil durch diese hindurch und somit auch durch das Motorgehäuse hindurch zurückzuziehen. Auf diese Weise kann das angetriebene Bauteil gewartet oder entfernt werden, ohne daß der Getriebemotor demontiert werden muß.

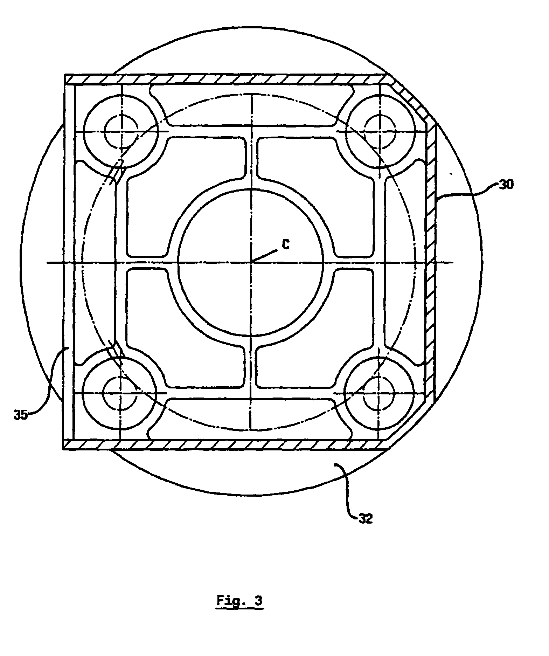

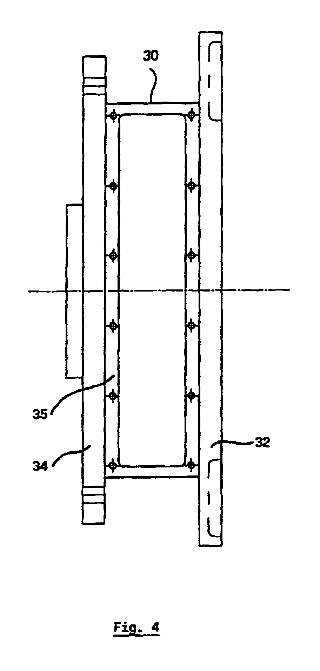

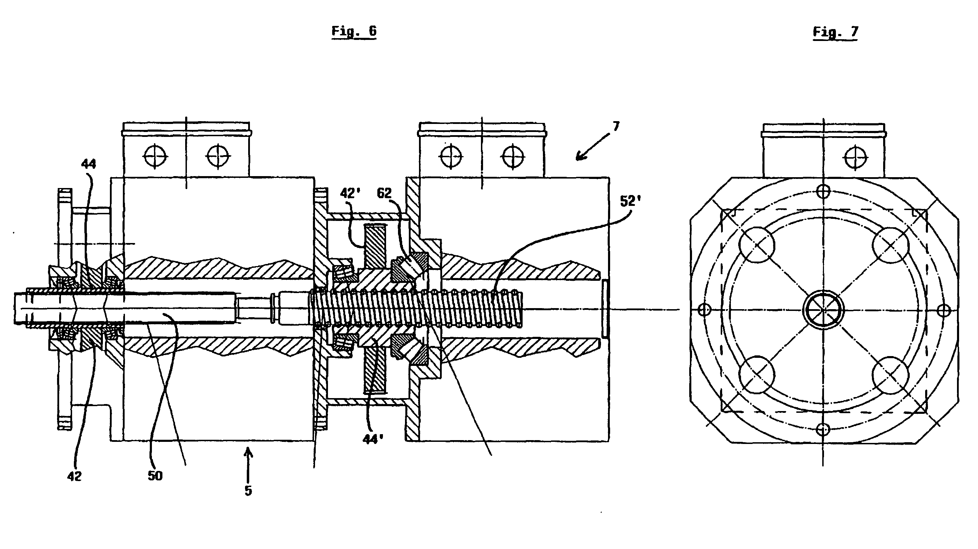

In den Figuren 6 und 7 ist eine Baugruppe gezeigt, die aus einem ersten Getriebemotor 5 und einem zweiten Getriebemotor 7 besteht. Der erste Getriebemotor entspricht demjenigen, der in den Figuren 1 bis 5 gezeigt ist. Für die bereits bekannten Bauteile werden dieselben Bezugszeichen verwendet, und es wird auf die obigen Erläuterungen verwiesen.

Die Getriebewelle 44 des ersten Getriebemotors ist mit Kegelrollenlagern gelagert und auf ihrer Innenfläche mit einem Keilnutprofil versehen, das mit einem Keilwellenprofil zusammenwirkt, das auf der Oberfläche einer Spindel 50 ausgebildet ist. Die Spindel 50 ist somit axial verschiebbar in der Getriebewelle 44 aufgenommen, kann jedoch von der Getriebewelle in Drehung versetzt werden.

Der zweite Getriebemotor 7 weist ein Abtriebszahnrad 42' auf, das auf einer Getriebewelle 44' angeordnet ist, die mit Kegelrollenlagern gelagert ist. Die Getriebewelle 44' ist auf der Innenseite mit einem Bewegungsgewinde versehen, in das ein Bewegungsgewinde 52 auf der Spindel 50 eingreift.

Die aus dem Getriebemotor 5 und dem Getriebemotor 7 bestehende Baugruppe ermöglicht, die Spindel 50 in Drehung zu versetzen, und zwar mittels des Getriebemotors 5, und in axialer Richtung zu verstellen, und zwar mittels des Getriebemotors 7. Auf diese Weise kann beispielsweise beim Antrieb einer Spritzgießmaschine eine Plastifizierschnecke in Drehung versetzt werden, wobei gleichzeitig die Einspritzbewegung bewirkt werden kann.

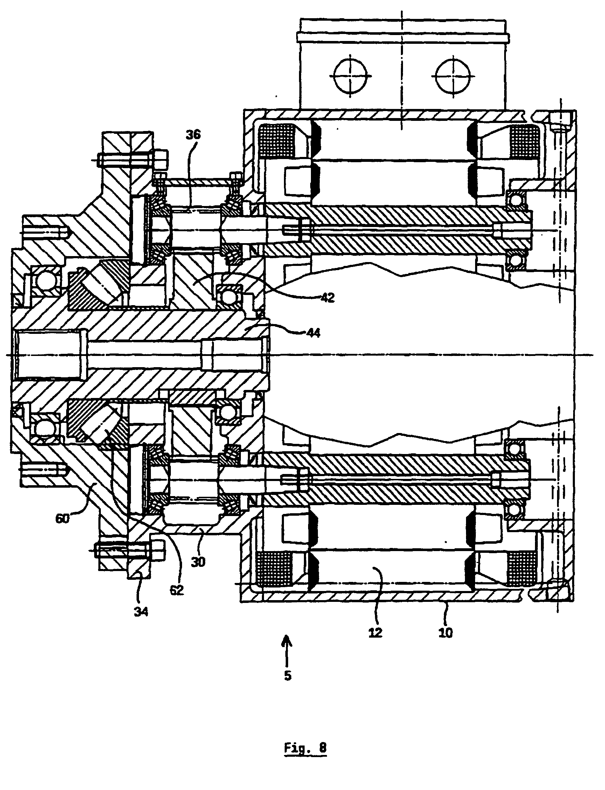

In Figur 8 ist ein Getriebemotor 5 gemäß einer zweiten Ausführungsform gezeigt. Für die von der ersten Ausführungsform bekannten Bauteile werden dieselben Bezugszeichen verwendet, und es wird auf die obigen Erläuterungen verwiesen.

Am Befestigungsflansch 34 des Getriebegehäuses 30 ist ein Vorspanngehäuse 60 angeschraubt, in dem ein Pendelrollenlager 62 angeordnet ist. An dem Pendelrollenlager 62 liegt ein Absatz der Getriebewelle 44 an. Auf diese Weise können hohe Axiallasten abgestützt werden.

Auch bei der zweiten Ausführungsform ist es möglich, ein von der Getriebewelle angetriebenes Bauteil durch die Getriebewelle hindurch nach hinten zurückzuziehen.

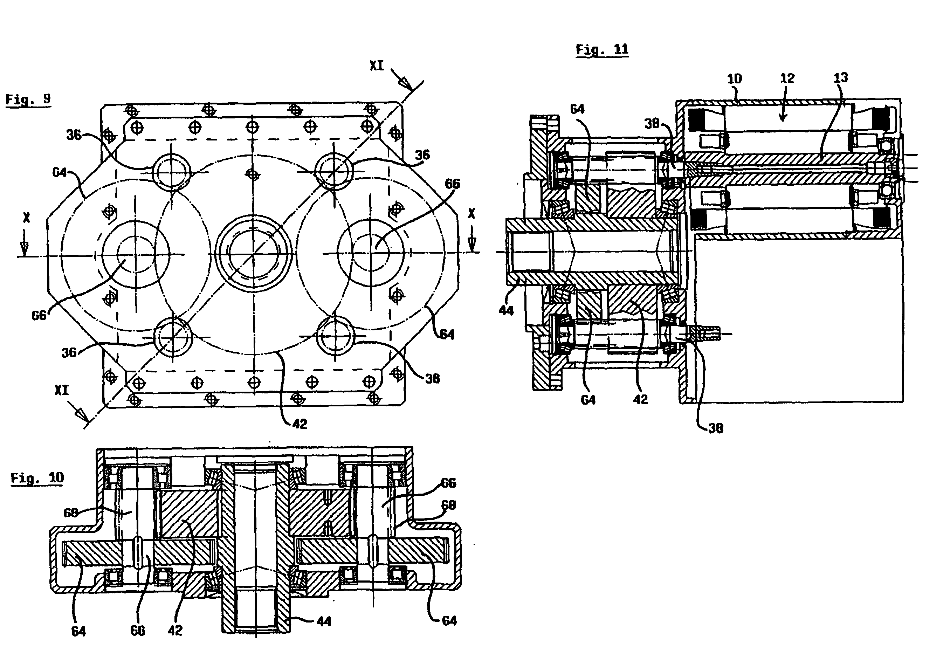

In den Figuren 9 bis 11 ist ein Getriebemotor gemäß einer dritten Ausführungsform gezeigt. Für die von den ersten beiden Ausführungsformen bekannten Bauteile werden dieselben Bezugszeichen verwendet, und es wird auf die obigen Erläuterungen verwiesen.

Der wesentlichste Unterschied zu den vorhergehenden Ausführungsformen besteht darin, daß ein zweistufiges Getriebe verwendet wird. Die vier Elektromotoren 12 sind paareweise über ihre Antriebsritzel 36 mit zwei Zwischenzahnrädern 64 verbunden, die auf einer Zwischenwelle 66 angebracht sind. Auf jeder Zwischenwelle 66 ist auch ein Zwischenritzel 68 angebracht, daß in das mittig angeordnete Abtriebszahnrad 42 eingreift.

Das Getriebe ermöglicht eine Untersetzung bis ca. i = 40, die sich zusammensetzt aus einer ersten Übersetzung mit i = 8 und einer zweiten Übersetzung mit i = 5. Durch die beiden Doppelzahneingriffe erhöht sich das mögliche Drehmoment gegenüber bekannten Konstruktionen um den Faktor 2. Aufgrund der Anordnung der Verzahnungen ergibt sich eine sehr kompakte Bauart mit dem Vorteil, daß der Abtrieb in gleicher Weise wie bei den vorhergehenden Ausführungsformen als Hohlwelle ausgebildet werden kann und somit für Extruder oder sonstige Anwendungen einen freien Durchtrieb nach vorne und nach hinten ermöglicht.

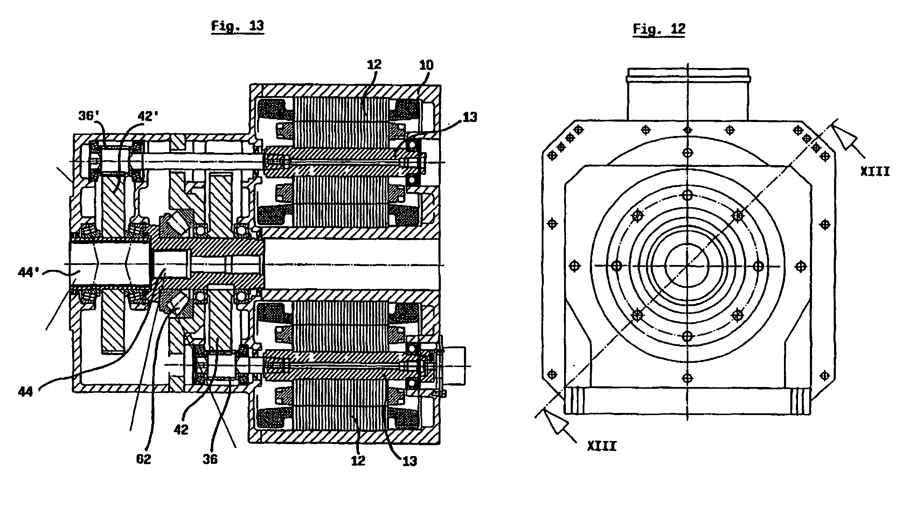

In den Figuren 12 und 13 ist ein Getriebemotor gemäß einer vierten Ausführungsform gezeigt. Für die von den vorangegangenen Ausführungsformen bekannten Bauteile werden die selben Bezugszeichen verwendet, und es wird auf die obigen Erläuterungen verwiesen.

Der Getriebemotor gemäß der vierten Ausführungsform weist zwei koaxiale Abtriebswellen oder Getriebewellen 44, 44' auf Mit der Getriebewelle 44' ist einer der vier Elektromotoren 12 gekoppelt, während die restlichen drei Elektromotoren mit der Getriebewelle 44 gekoppelt sind. Hauptanwendungsgebiet eines solchen Getriebemotors sind Extruder oder Spindelantriebe mit zwei unabhängig voneinander in der Drehzahl und der Untersetzung wählbaren Getriebestufen, die einen koaxialen Abtrieb der beiden Getriebeteile ermöglicht. Beispielsweise können eine innere Extruderschnecke und eine äußere Zuführschnecke mit unterschiedlichen Drehzahlen und unterschiedlichen Drehmomenten angetrieben werden

Es besteht die Möglichkeit, die beiden Abtriebe jeweils nach der gleichen Seite herauszuführen oder einen Abtrieb in Richtung Motorseite herauszuführen.

### Bezugszeichenliste:

- 5:: Getriebemotor
- 7:: Getriebemotor
- 10:: Motorgehäuse
- 12:: Elektromotor
- 13:: Motorwelle
- 14:: Motoraufnahmeraum
- 15:: Getriebewellenöffnung
- 16:: innenliegender Kühlkanal
- 18:: außenliegender Kühlkanal
- 20:: Überströmkanal
- 22:: Querkanal
- 24:: Bohrung
- 26:: Schraubstopfen
- 30:: Getriebegehäuse
- 32:: Motorflansch
- 34:: Befestigungsflansch
- 35:: Montageöffnung
- 36:: Antriebsritzel
- 38:: Ritzelwelle
- 39:: Kegelrollenlager
- 40:: Spannschraube
- 42:: Abtriebszahnrad
- 44:: Getriebewelle
- 46:: Schrägkugellager
- 48:: Platte
- 50:: Spindel
- 52:: Bewegungsgewinde
- 60:: Vorspanngehäuse
- 62:: Pendelrollenlager
- 64:: Zwischenzahnrad
66: Zwischenwelle
68: Zwischenritzel

## Patentansprüche

1. Getriebemotor (5; 7), insbesondere für Spritzgießmaschinen und Extruder, mit einem Motorgehäuse (10), mehreren Elektromotoren (12), die in dem Motorgehäuse angeordnet sind und jeweils ein Antriebsritzel (36) aufweisen, die zusammen symmetrisch zu einem zentralen Abtriebszahnrad (42) angeordnet sind, das auf einer Getriebewelle (44) angebracht ist, wobei das Motorgehäuse (10) für jeden Elektromotor (12) einen Motoraufnahmeraum (14) aufweist, **dadurch gekennzeichnet, daß** im Motoraufnahmeraum (14) der Stator des entsprechenden Elektromotors (12) fest angebracht ist, und daß zwischen den Motoraufnahmeräumen (14) Kühlkanäle (16, 18) angeordnet sind.

2. Getriebemotor nach Anspruch 1, **dadurch gekennzeichnet, daß** vier Elektromotoren (12) vorgesehen sind, die im Winkel von jeweils 90° um das Abtriebszahnrad (42) herum angeordnet sind.

3. Getriebemotor nach einem der Ansprüche 1 und 2, **dadurch gekennzeichnet, daß** die Getriebewelle (44) als Hohlwelle ausgeführt ist.

4. Getriebemotor nach einem der vorhergehenden Ansprüche, **dadurch gekennzeichnet, daß** das Antriebsritzel (36) eine Ritzelwelle (38) aufweist, die durch eine Konusverbindung kraftschlüssig mit der Motorwelle (13) des entsprechenden Elektromotors (12) verbunden ist.

5. Getriebemotor nach Anspruch 4, **dadurch gekennzeichnet, daß** die Motorwelle (13) hohl ist und sich durch sie hindurch eine Spannschraube (40) erstreckt, mittels der die Ritzelwelle (38) mit der Motorwelle (13) verspannt ist.

6. Getriebemotor nach einem der vorhergehenden Ansprüche, **dadurch gekennzeichnet, daß** zwischen zwei benachbarten Elektromotoren (12) zwei Kühlkanäle (16, 18) vorgesehen sind, die von einem Kühlmedium durchströmt werden können.

7. Getriebemotor nach Anspruch 6, **dadurch gekennzeichnet, daß** der Kühlkanal (16, 18) einen etwa dreieckigen Querschnitt hat.

8. Getriebemotor nach einem der Ansprüche 6 und 7, **dadurch gekennzeichnet, daß** als Kühlmedium Luft verwendet wird und daß die Kühlkanäle an ihrem dem Abtriebszahnrad zugewandten Ende geöffnet sind.

9. Getriebemotor nach einem der Ansprüche 6 und 7, **dadurch gekennzeichnet, daß** als Kühlmedium eine Kühlflüssigkeit verwendet wird und die Kühlkanäle (16, 18) an ihrem dem Abtriebszahnrad (42) zugewandten Ende verschlossen sind, wobei an diesem Ende ein Überströmkanal (20) zwischen benachbarten Kühlkanälen (16, 18) gebildet ist, so daß die benachbarten Kühlkanäle (16, 18) in entgegengesetzten Richtungen durchströmt werden.

10. Getriebemotor nach Anspruch 9, **dadurch gekennzeichnet, daß** an dem vom Abtriebszahnrad (42) abgewandten Ende des Motorgehäuses (10) Querkanäle (22) vorgesehen sind, die sich jeweils durch einen der Motoraufnahmeräuxne (14) für einen Elektromotor (12) hindurcherstrecken und einen der Kühlkanäle (16) zwischen zwei der Elektromotoren (12) mit einem der Kühlkanäle (18) zwischen zwei anderen der Elektromotoren (12) miteinander verbinden.

11. Getriebemotor nach einem der vorhergehenden Ansprüche, **dadurch gekennzeichnet, daß** die Antriebsritzel (36) und das Abtriebszahnrad (42) in einem Getriebegehäuse (30) angeordnet sind, das mit dem Motorgehäuse (10) verschraubt ist.

12. Getriebemotor nach Anspruch 11, **dadurch gekennzeichnet, daß** das Getriebegehäuse (30) eine seitliche Montageöfinung (35) aufweist, durch welche das Abtriebszahnrad (42) in das Getriebegehäuse (30) eingebracht werden kann.

13. Getriebemotor nach Anspruch 9 und einem der Ansprüche 11 und 12, **dadurch gekennzeichnet, daß** das Getriebegehäuse (30) die Kühlkanäle (16, 18) des Motorgehäuses (10) verschließt.

14. Getriebemotor nach einem der vorhergehenden Ansprüche, **dadurch gekennzeichnet, daß** ein zweiter Getriebemotor (7) vorgesehen ist, dessen Abtriebszahnrad (44') konzentrisch mit der Getriebewelle (44') des ersten Getriebemotors angeordnet ist, wobei das Abtriebszahnrad (42) des ersten Getriebemotors (5) mittels einer Keilwellenverbindung mit einer Spindel (50) verbunden ist, auf der die Getriebewelle (44') des zweiten Getriebemotors (7) angeordnet ist, wobei zwischen dieser Getriebewelle (44') und der Spindel (50) ein Bewegungsgewinde vorgesehen ist.

15. Getriebemotor nach Anspruch 14, **dadurch gekennzeichnet, daß** die Getriebewelle (44') des zweiten Getriebemotors (7) mittels Axiallagern gelagert ist.

16. Getriebemotor nach einem der vorhergehenden Ansprüche, **dadurch gekennzeichnet, daß** es sich bei den Zahnrädern (36; 42) um schrägverzahnte Stirnräder handelt.

17. Getriebemotor nach einem der vorhergehenden Ansprüche, **dadurch gekennzeichnet, daß** zur Lagerung Kegelrollenlager in X-Anordnung verwendet werden.

18. Getriebemotor nach einem der vorhergehenden Ansprüche, **dadurch gekennzeichnet, daß** zur Lagerung Pendelrollenlager verwendet werden.

19. Getriebemotor nach einem der vorhergehenden Ansprüche, **dadurch gekennzeichnet, daß** zur Lagerung Schrägkugellager in X-Anordnung verwendet werden.

20. Getriebemotor nach einem der vorhergehenden Ansprüche, **dadurch gekennzeichnet, daß** eine zweistufige Untersetzung mit einem Zwischenzahnrad (64), einer Zwischenwelle (66) und einem Zwischenritzel (68) verwendet wird.

21. Getriebemotor nach einem der vorhergehenden Ansprüche, **dadurch gekennzeichnet, daß** zwei Getriebewellen vorgesehen sind, wobei ein Teil der Elektromotoren (12) mit der ersten Getriebewelle (44) und die restlichen Elektromotoren (12) mit der zweiten Getriebewelle (44') verbunden sind.

## Claims

1. A geared motor (5; 7), in particular for injection moulding machines and extruders, comprising a motor casing (10), a plurality of electric motors (12) arranged in the motor casing and each having a driving pinion (36) which together are arranged symmetrically in relation to a central output gear (42) mounted on a gear shaft (44), the motor casing (10) having for each electric motor (12) a motor accommodation space (14), **characterized in that** the stator of the corresponding electric motor (12) is firmly secured in the motor accommodation space (14), and **in that** cooling ducts (16, 18) are arranged between the motor accommodation spaces (14).

2. The geared motor according to claim 1, **characterized in that** four electric motors (12) are provided which are arranged around the output gear (42) spaced apart from each other at an angle of 90°.

3. The geared motor according to either of claims 1 and 2, **characterized in that** the gear shaft (44) is configured as a hollow shaft.

4. The geared motor according to any of the preceding claims, **characterized in that** the driving pinion (36) has a pinion shaft (38) that is frictionally connected to the motor shaft (13) of the corresponding electric motor (12) by a cone connection.

5. The geared motor according to claim 4, **characterized in that** the motor shaft (13) is hollow and a clamping screw (40) extends through it by means of which the pinion shaft (38) is braced to the motor shaft (13).

6. The geared motor according to any of the preceding claims, **characterized in that** two cooling ducts (16, 18) through which a cooling medium may flow are provided between two adjacent electric motors (12).

7. The geared motor according to claim 6, **characterized in that** the cooling duct (16, 18) has a roughly triangular cross-section.

8. The geared motor according to either of claims 6 and 7, **characterized in that** the cooling medium used is air and that the cooling ducts are open at their ends facing the output gear.

9. The geared motor according to either of claims 6 and 7, **characterized in that** the cooling medium used is a cooling fluid and the cooling ducts (16, 18) are closed at their ends facing the output gear (42), an overflow duct (20) being formed at that end between adjacent cooling ducts (16, 18) so that a flow passes through the adjacent cooling ducts (16, 18) in opposite directions.

10. The geared motor according to claim 9, **characterized in that** transverse ducts (22) are provided at the end of the motor casing (10) facing away from the output gear (42), which each extend through one of the motor accommodation spaces (14) for an electric motor (12) to connect one of the cooling ducts (16) between two of the electric motors (12) to one of the cooling ducts (18) between two others of the electric motors (12).

11. The geared motor according to any of the preceding claims, **characterized in that** the driving pinions (36) and the output gear (42) are arranged in a gear casing (30) which is bolted to the motor casing (10).

12. The geared motor according to claim 11, **characterized in that** the gear casing (30) has a lateral assembly opening (35) through which the output gear (42) may be introduced into the gear casing (30).

13. The geared motor according to claim 9 and either of claims 11 and 12, **characterized in that** the gear casing (30) closes off the cooling ducts (16, 18) of the motor casing (10).

14. The geared motor according to any of the preceding claims, **characterized in that** a second geared motor (7) is provided having an output gear (42') that is arranged concentrically with the gear shaft (44) of the first geared motor, the output gear (42) of the first geared motor (5) being connected with a spindle (50) by means of a splined shaft connection, the spindle (50) having arranged thereon the gear shaft (44') of the second geared motor (7), a screw drive mechanism being provided between this gear shaft (44') and the spindle (50).

15. The geared motor according to claim 14, **characterized in that** the gear shaft (44') of the second geared motor (7) is mounted by means of thrust bearings.

16. The geared motor according to any of the preceding claims, **characterized in that** the gears (36; 42) are helical spur gears.

17. The geared motor according to any of the preceding claims, **characterized in that** tapered roller bearings in an X-arrangement are used for the mounting.

18. The geared motor according to any of the preceding claims, **characterized in that** spherical roller bearings are used for the mounting.

19. The geared motor according to any of the preceding claims, **characterized in that** angular ball bearings in an X-arrangement are used for the mounting.

20. The geared motor according to any of the preceding claims, **characterized in that** a two-stage gear reduction is used having an intermediate gear (64), an intermediate shaft (66) and an intermediate pinion (68).

21. The geared motor according to any of the preceding claims, **characterized in that** two gear shafts are provided, some of the electric motors (12) being connected to the first gear shaft (44) and the remaining electric motors (12) being connected to the second gear shaft (44').

## Revendications

1. Motoréducteur (5 ; 7), en particulier pour presses d'injection ou pour extrudeuses, comportant un boîtier de moteur (10), plusieurs moteurs électriques (12) qui sont agencés dans le boîtier de moteur et présentent chacun un pignon d'entraînement (36) et qui sont agencés ensemble de manière symétrique par rapport à une roue dentée menée (42) centrale qui est montée sur un arbre de transmission (44), le boîtier de moteur (10) présentant pour chaque moteur électrique (12) un espace de réception de moteur (14), **caractérisé en ce que** le stator du moteur électrique (12) correspondant est installé de manière fixe dans l'espace de réception de moteur (14), et **en ce que** des canaux de refroidissement (16, 18) sont agencés entre les espaces de réception de moteur (14).

2. Motoréducteur selon la revendication 1, **caractérisé en ce qu'**il est prévu quatre moteurs électriques (12) qui sont agencés autour de la roue dentée menée (42) sous un angle respectif de 90°.

3. Motoréducteur selon l'une des revendications 1 et 2, **caractérisé en ce que** l'arbre de transmission (44) est réalisé sous forme d'arbre creux.

4. Motoréducteur selon l'une des revendications précédentes, **caractérisé en ce que** le pignon d'entraînement (36) présente un arbre de pignon (38) qui est relié à l'arbre de moteur (13) du moteur électrique (12) correspondant, par coopération de forces au moyen d'une liaison à cônes.

5. Motoréducteur selon la revendication 4, **caractérisé en ce que** l'arbre de moteur (13) est creux et à travers celui-ci s'étend une vis de serrage (40) au moyen de laquelle l'arbre de pignon (38) est serré avec l'arbre de moteur (13).

6. Motoréducteur selon l'une des revendications précédentes, **caractérisé en ce qu'**entre deux moteurs électriques (12) voisins sont prévus deux canaux de refroidissement (16, 18) qui peuvent être parcourus par un fluide de refroidissement.

7. Motoréducteur selon la revendication 6, **caractérisé en ce que** le canal de refroidissement (16, 18) a une section transversale approximativement triangulaire.

8. Motoréducteur selon l'une des revendications 6 et 7, **caractérisé en ce que** de l'air est utilisé comme fluide de refroidissement et **en ce que** les canaux de refroidissement sont ouverts à leur extrémité tournée vers la roue dentée menée.

9. Motoréducteur selon l'une des revendications 6 et 7, **caractérisé en ce qu'**un liquide de refroidissement est utilisé comme fluide de refroidissement et les canaux de refroidissement (16, 18) sont fermés à leur extrémité tournée vers la roue dentée menée (42), un canal de trop-plein (20) entre des canaux de refroidissement (16, 18) voisins étant formés à cette extrémité, de sorte que les canaux de refroidissement (16, 18) voisins sont parcourus dans des directions opposées.

10. Motoréducteur selon la revendication 9, **caractérisé en ce qu'**à l'extrémité du boîtier de moteur (10), qui est détournée de la roue dentée menée (42), sont prévus des canaux transversaux (22) qui s'étendent chacun à travers un des espaces de réception de moteur (14) pour un moteur électrique (12) et qui relient l'un à l'autre un des canaux de refroidissement (16) entre deux des moteurs électriques (12) à l'un des canaux de refroidissement (18) entre deux autres des moteurs électriques (12).

11. Motoréducteur selon l'une des revendications précédentes, **caractérisé en ce que** les pignons d'entraînement (36) et la roue dentée menée (42) sont agencés dans un boîtier d'engrenages (30) qui est vissé avec le boîtier de moteur (10).

12. Motoréducteur selon la revendication 11, **caractérisé en ce que** le boîtier d'engrenages (30) présente une ouverture de montage (35) latérale à travers laquelle la roue dentée menée (42) peut être introduite dans le boîtier d'engrenages (30).

13. Motoréducteur selon la revendication 9 et selon l'une des revendications 11 et 12, **caractérisé en ce que** le boîtier d'engrenages (30) ferme les canaux de refroidissement (16, 18) du boîtier de moteur (10).

14. Motoréducteur selon l'une des revendications précédentes, **caractérisé en ce qu'**il est prévu un deuxième motoréducteur (7) dont la roue dentée menée (42') est agencée de manière concentrique avec l'arbre de transmission (44) du premier moteur de transmission, la roue dentée menée (42) du premier moteur de transmission (5) étant reliée au moyen d'une liaison par arbre cannelé à une broche (50) sur laquelle est agencé l'arbre de transmission (44') du deuxième moteur de transmission (7), un pas de vis de mouvement étant agencé entre cet arbre de transmission (44') et la broche (50).

15. Motoréducteur selon la revendication 14, **caractérisé en ce que** l'arbre de transmission (44') du deuxième motoréducteur (7) est monté au moyen de paliers axiaux.

16. Motoréducteur selon l'une des revendications précédentes, **caractérisé en ce que** les roues dentées (36 ; 42) sont des roues droites à dentures hélicoïdales.

17. Motoréducteur selon l'une des revendications précédentes, **caractérisé en ce que** pour le montage sont utilisés des roulements à galets coniques avec agencement en X.

18. Motoréducteur selon l'une des revendications précédentes, **caractérisé en ce que** pour le montage sont utilisés des roulements à rotules.

19. Motoréducteur selon l'une des revendications précédentes, **caractérisé en ce que** pour le montage sont utilisés des roulements à billes à portée oblique avec agencement en X.

20. Motoréducteur selon l'une des revendications précédentes, **caractérisé en ce qu'**on utilise une réduction à deux étages avec une roue dentée intermédiaire (64), un arbre intermédiaire (66) et un pignon intermédiaire (68).

21. Motoréducteur selon l'une des revendications précédentes, **caractérisé en ce qu'**il est prévu deux arbres de transmission, une partie des moteurs électriques (12) étant reliée au premier arbre de transmission (44) et les moteurs électriques restants (12) étant reliés au deuxième arbre de transmission (44').
